# FASCICULE DE BREVET EUROPEEN

(11) **EP 3 546 194 B1**
(45) Date de publication et mention de la délivrance du brevet: **21.10.2020**
(21) Numéro de dépôt: 19162738.9
(22) Date de dépôt: 14.03.2019
(51) Int. Cl.: B29C 49/42, B29C 49/06, B65G 47/84

(54) **DISPOSITIF DE CONVOYAGE MUNI D'UN SYSTEME DE SECURITE**
FÖRDERVORRICHTUNG, DIE MIT EINEM SICHERHEITSSYSTEM AUSGESTATTET IST
CONVEYING DEVICE PROVIDED WITH A SAFETY SYSTEM

(30) Priorité: 28.03.2018 FR 1852667
(43) Date de publication de la demande: 02.10.2019
(73) Titulaire: Sidel Participations, 76930 Octeville-sur-Mer (FR)
(72) Inventeur: MORIN, Stéphane, 76930 Octeville sur Mer (FR)
(74) Mandataire: Sidel Group

(56) Documents cités:
- US-A1- 2008 044 510
- US-B2- 7 736 142
- US-B2- 7 849 996

## Description

### DOMAINE TECHNIQUE DE L'INVENTION

L'invention concerne un dispositif de convoyage de corps creux pour une installation de fabrication de récipients par formage de préformes, le dispositif de convoyage comportant :
- au moins un élément de transport mobile dans une direction longitudinale, et comportant au moins un mandrin coulissant verticalement entre une position active dans laquelle une tête est destinée à saisir un corps creux par un col, notamment par emmanchement dans le col, et une position inactive dans laquelle la tête est destinée à libérer le col ;
- au moins un premier suiveur de came solidaire en coulissement du mandrin ;
- une came de réception qui comporte un chemin de came qui coopère directement avec le premier suiveur de came pour maintenir le mandrin dans sa position inactive ;

### ARRIERE PLAN TECHNIQUE DE L'INVENTION

Le document US20080044510 décrit un tel dispositif de convoyage utilisé pour convoyer des préformes. Le dispositif décrit comprend un élément de transport mobile du type maillon de chaine de tournette, un élément suiveur et une came comportant une portion de réception pour maintenir le mandrin dans sa position inactive.

Dans la suite de la description, le terme corps creux désignera soit une préforme, soit un récipient fini. L'invention est ici plus particulièrement décrite en application à une préforme.

Les préformes présentent généralement un corps sensiblement cylindrique de révolution à paroi tubulaire épaisse qui est fermé à l'une de ses extrémités axiales par un fond à paroi épaisse, et qui est prolongé à son autre extrémité par un col, lui aussi tubulaire. Le col est conformé à sa forme et à ses dimensions définitives tandis que le corps de la préforme, préalablement chauffé, est destiné à subir une déformation relativement importante pour le conformer en récipient lors d'une étape de formage.

L'installation de production comporte une station de conditionnement thermique qui permet, lors d'une étape préalable de chauffage, de rendre malléable le corps de la préforme par chauffage au-delà d'une température de transition vitreuse.

Ensuite, lors de l'étape de formage, la préforme ainsi chauffée est placée dans un moule d'une station de formage qui présente une empreinte de moulage conforme au récipient à obtenir. Un fluide sous pression, tel que de l'air, est alors injecté dans le corps malléable de la préforme afin d'en plaquer la paroi contre l'empreinte du moule.

Tout au long de leur trajet à travers l'installation de production, les préformes sont prises en charge individuellement par des dispositifs de convoyage. Certains de ces dispositifs de convoyage, notamment celui de la station de conditionnement thermique, comportent des mandrins dont chacun est destiné à saisir le col d'une préforme lors d'une opération dite de "vêtissage". Le mandrin permet ainsi de faire circuler la préforme dans la station de conditionnement thermique. La préforme ainsi chauffée est ensuite transférée à une roue de transfert suivante. A cet effet, le mandrin libère le col de la préforme lors d'une opération dite de "dévêtissage", aussitôt que la préforme est prise en charge par ladite roue de transfert.

En variante, il est aussi connu d'utiliser des mandrins qui sont conçus pour saisir le col par sa face externe.

Les opérations de vêtissage et de dévêtissage sont généralement commandées par une came qui coopère avec un suiveur de came du mandrin. Le mandrin est généralement rappelé élastiquement vers sa position inactive. La vitesse de l'opération de dévêtissage est limitée par la pente que doit présenter le chemin de came pour commander le mandrin vers sa position inactive à l'encontre de l'effort de rappel élastique.

Pour s'affranchir de cette limitation, on a proposé de réaliser l'opération de dévêtissage au moyen d'une came élévatrice qui est intercalée entre un chemin de came amont, le long duquel le mandrin est commandé en position active, et un chemin de came aval, le long duquel le mandrin est commandé en position inactive. Cette came élévatrice comporte un chemin de came plat, et c'est la came elle-même qui est montée coulissante entre une position basse, à niveau avec le chemin de came amont, et une position haute, à niveau avec le chemin de came aval, pour pousser le suiveur de came, et donc le mandrin, vers sa position inactive. Le coulissement de la came élévatrice est commandé par un moteur électrique qui permet de réaliser l'opération de dévêtissage sensiblement plus rapidement que les rampes traditionnelles. En effet, l'opération de dévêtissage a lieu sur une distance sensiblement inférieure à la distance qu'occupe une rampe.

Le moteur électrique doit être synchronisé très précisément avec le déplacement des mandrins le long de leur trajet de transport. Différentes solutions sont connues pour réaliser une telle synchronisation. L'une d'elles consiste par exemple à équiper le dispositif de convoyage d'un codeur qui permet de connaître à tout moment la position et la vitesse de déplacement des mandrins.

Cependant, il peut arriver que le moteur électrique commandant la came élévatrice soit désynchronisé par rapport aux mandrins. Ceci est par exemple le cas lors d'une coupure de courant au début de laquelle le moteur électrique est instantanément arrêté tandis que les mandrins continuent à se déplacer quelques secondes sous l'effet de leur inertie. Mais ce peut aussi être le cas lors d'un dysfonctionnement du codeur ou de tout autre élément entrant dans la chaîne de synchronisation du moteur électrique de la came élévatrice.

En cas de désynchronisation, les suiveurs de came qui commandent l'opération de dévêtissage viennent heurter violemment une face d'extrémité amont de la came élévatrice, lorsque celle-ci n'occupe pas sa position basse, ou une face d'extrémité amont de la came portant le chemin de came aval. Sous l'effet du choc, de nombreuses pièces du dispositif de convoyage sont susceptibles d'être endommagées définitivement.

### BREF RESUME DE L'INVENTION

L'invention propose un dispositif de convoyage de corps creux pour une installation de fabrication de récipients par formage de préformes, le dispositif de convoyage comportant :
- au moins un élément de transport mobile dans une direction longitudinale, et comportant au moins un mandrin coulissant verticalement entre une position active dans laquelle une tête est destinée à saisir un corps creux par un col, notamment par emmanchement dans le col, et une position inactive dans laquelle la tête est destinée à libérer le col ;
- au moins un premier suiveur de came solidaire en coulissement du mandrin ;
- une came de réception qui comporte un chemin de came qui coopère directement avec le premier suiveur de came pour maintenir le mandrin dans sa position inactive ;
caractérisé en ce qu'il comporte :
- une came élévatrice, agencée directement en amont de la came de réception, la came élévatrice étant montée coulissante verticalement entre une position basse et une position haute pour commander le mandrin depuis sa position active vers sa position inactive en poussant le premier suiveur de came ;
- au moins un deuxième suiveur de came de sécurité solidaire en coulissement du mandrin ;
- une came de sécurité qui comporte une rampe de commande pour commander le mandrin depuis sa position active vers sa position inactive par coopération directe avec le deuxième suiveur de came en cas de défaillance de la came élévatrice.

Selon d'autres caractéristiques de l'invention :
- le premier suiveur de came et le deuxième suiveur de came sont décalés transversalement, la came de sécurité étant agencée parallèlement à la came de réception ;
- la came de réception présente une face d'extrémité amont qui est susceptible d'être heurtée par le premier suiveur de came lorsque le deuxième suiveur de came roule sur la rampe de commande, la came de réception étant escamotable depuis une position de fonctionnement normal, dans laquelle son chemin de came est dans le prolongement direct du chemin de came de la came élévatrice en position haute, vers une position de sécurité dans laquelle sa face d'extrémité amont est en dehors du trajet du premier suiveur de came ;
- la came de réception est susceptible d'être poussée vers sa position de sécurité sous l'effet d'un choc avec le premier suiveur de came ;
- la came de réception est montée coulissante longitudinalement sur la came de sécurité entre sa position de fonctionnement normal et sa position de sécurité ;
- le dispositif comporte des moyens d'indexation de la came de réception dans sa position de fonctionnement normal ;
- la came élévatrice présente une face d'extrémité amont qui est susceptible d'être heurtée par le premier suiveur de came en cas de désynchronisation, la came élévatrice étant montée mobile sur un support coulissant verticalement entre une position fonctionnelle dans laquelle la came élévatrice est susceptible d'être déplacée par le support entre sa position basse et sa position haute, et une position escamotée dans laquelle sa face d'extrémité amont est en dehors du trajet du premier suiveur de came quelle que soit la position du support ;
- la came élévatrice est susceptible d'être poussée vers sa position escamotée sous l'effet d'un choc avec le premier suiveur de came ;
- la came élévatrice est montée pivotante au tour d'un axe transversal sur son support entre sa position fonctionnelle et sa position escamotée ;
- le dispositif comporte des moyens d'indexation de la came élévatrice dans sa position fonctionnelle par rapport au support ;
- la came élévatrice comporte une face tournée vers une face en vis-à-vis de la came de réception, la came de réception étant susceptible d'être poussée par la came élévatrice vers sa position de sécurité lorsque la came élévatrice est déplacée vers sa position escamotée.

Selon un autre aspect, l'invention porte plus largement sur un dispositif de convoyage de corps creux pour une installation de fabrication de récipients par formage de préformes, le dispositif de convoyage comportant :
- au moins un élément de transport mobile dans une direction longitudinale, et comportant au moins un mandrin coulissant verticalement entre une position active dans laquelle une tête est destinée à saisir un corps creux par un col, notamment par emmanchement dans le col, et une position inactive dans laquelle la tête est destinée à libérer le col ;
- au moins un premier suiveur de came solidaire en coulissement du mandrin ;
- une came de réception qui comporte un chemin de came qui coopère directement avec le premier suiveur de came pour maintenir le mandrin dans sa position inactive ;
caractérisé en ce qu'il comporte :
- une came élévatrice, agencée directement en amont de la came de réception, la came élévatrice étant montée coulissante verticalement entre une position basse et une position haute pour commander le mandrin depuis sa position active vers sa position inactive en poussant le premier suiveur de came ;

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue de dessus qui représente une partie du dispositif de transport de corps creux réalisée selon l'invention ;
- la figure 2 est une vue en coupe selon le plan de coupe 2-2 de la figure 1 qui représente un mandrin commandé dans une position active par un premier suiveur de came ;
- la figure 3 est une vue en coupe selon le plan de coupe 3-3 de la figure 1 qui représente un mandrin commandé dans une position inactive par un premier suiveur de came ;
- la figure 4 est une vue de détail qui représente une came élévatrice du dispositif de convoyage dans une position basse et un premier suiveur de came dans une position active ;
- la figure 5 est une vue similaire à celle de la figure 5 qui représente la came élévatrice en position haute qui pousse le premier suiveur de came dans une position inactive ;
- la figure 6 est une vue en perspective qui représente les cames du dispositif de convoyage situées de part et d'autre de la came élévatrice, une came de sécurité étant agencée parallèlement à une came de réception en aval de la came élévatrice ;
- la figure 7 est une vue en perspective d'un angle opposé à celui de la figure 6 qui représente la came élévatrice dans une position fonctionnelle et la came de réception dans une position de fonctionnement normal ;
- la figure 8 est une vue similaire à celle de la figure 7 qui représente la came élévatrice dans une position escamotée et qui représente la came de réception dans une position de sécurité ;
- la figure 9 est une vue en coupe selon le plan de coupe 9-9 de la figure 7 qui représente les moyens de montage de la came de réception en coulissement sur la came de sécurité.

### DESCRIPTION DETAILLEE DES FIGURES

Dans la suite de la description, des éléments présentant une structure identique ou des fonctions analogues seront désignés par une même référence.

Dans la suite de la description, on adoptera à titre non limitatif des orientations :
- longitudinale "L" orientée selon le sens de déplacement des éléments de transport ;
- verticale "V" orientée selon l'axe de coulissement des mandrins ;
- transversale "T" orientée orthogonalement aux directions longitudinale et verticale.

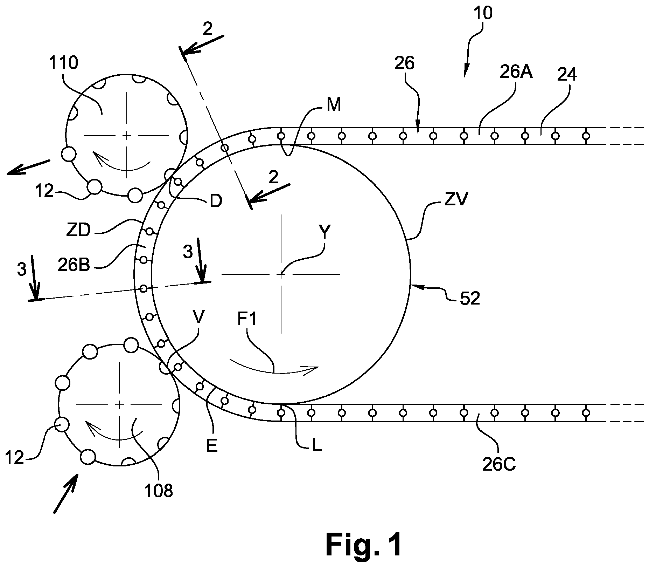

Sur la figure 1 est représentée schématiquement une partie d'un dispositif 10 de convoyage de corps 12 creux en matière plastique, plus particulièrement en matière thermoplastique. Dans la description qui suit, les corps 12 creux représentés sont des préformes en matériau thermoplastique de récipients à partir desquelles doivent être formés (par soufflage ou étirage soufflage) des récipients (non représentés). Le dispositif 10 de convoyage est destiné à être intégré à une installation de production de récipients. Dans la description qui suit, la référence 12 est utilisée pour désigner une ou plusieurs "préformes", étant entendu que le dispositif 10 de convoyage, moyennant des modifications essentiellement dimensionnelles, pourrait être utilisée pour transporter d'autres types de corps creux notamment des récipients intermédiaires ou des récipients finaux tels qu'on peut en rencontrer dans des installations de production ou de traitement de récipients.

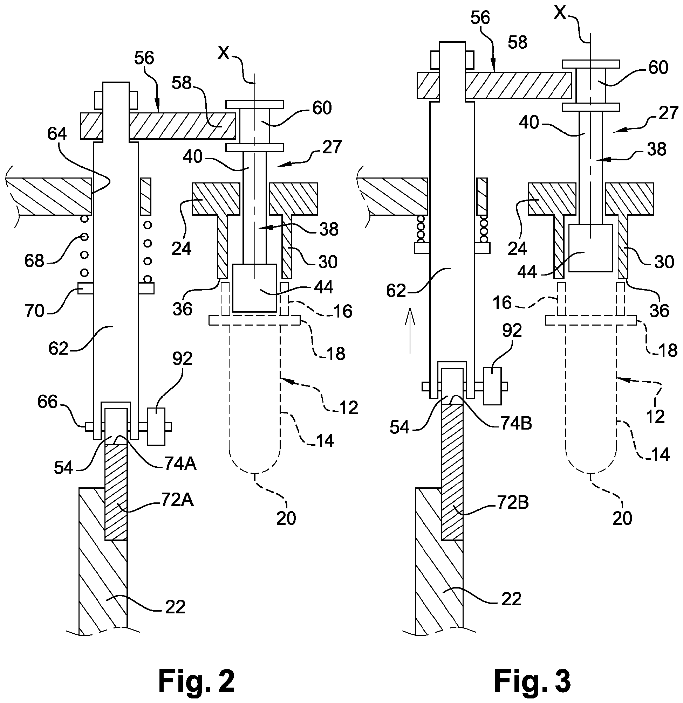

On a représenté un tel corps 12 creux en traits interrompus à la figure 2. Chaque corps 12 creux comprend un corps 14 (cylindrique dans le cas d'une préforme; de formes diverses dans le cas d'un récipient final ou intermédiaire), un col 16 qui s'étend à partir d'une extrémité supérieure du corps 14, une collerette 18 qui sépare le col 16 du corps 14, et un fond 20 qui s'étend à une extrémité inférieure du corps 14, opposée au col 16.

Le dispositif 10 de convoyage est par exemple prévu pour transporter les corps 12 creux, formés ici par des préformes, dans une station de conditionnement thermique (non représentée) dans laquelle les préformes doivent être chauffées à une température supérieure à leur température de transition vitreuse, en vue d'être ensuite conformées en récipients au sein d'une station de formage (non représentée), également appelée souffleuse, intégrée à la même installation de production et équipée d'un carrousel sur lequel sont montés une pluralité de moules à l'empreinte des récipients.

Le dispositif 10 de convoyage comprend un bâti 22 fixe et au moins un élément 24 de transport. Le dispositif 10 de convoyage comporte ici une pluralité desdits éléments 24 de transport formant les maillons d'une chaîne 26 de transport fermée visible à la figure 1. La chaîne 26 de transport est souple. A cet effet, les éléments 24 de transport sont montés articulés les uns aux autres autour d'axes verticaux. La chaîne 26 de transport est montée déplaçable par rapport au bâti 22.

En se reportant à nouveau à la figure 2, chaque élément 24 de transport porte au moins une tournette 27. Chaque tournette 27 comporte une douille 30 d'axe vertical qui est ici fixée sous l'élément 24 de transport. La douille 30 présente à son extrémité inférieure une face 36 annulaire de butée qui entoure un orifice inférieur débouchant de la douille 30.

Chaque tournette 27 comprend un mandrin 38 monté coulissant en translation verticale suivant un axe X vertical, par rapport à l'élément 24 de transport. Le mandrin 38 comprend une tige 40 cylindrique. Le mandrin 38 comprend, à une extrémité inférieure de la tige 40, une tête 44 de plus grand diamètre, qui s'étend dans la douille 30.

Le mandrin 38 est monté libre en coulissement vertical par rapport à l'élément 24 de transport, entre une position inactive (figure 3), dans laquelle la tête 44 est rétractée au-dessus de la face 36 de butée, et une position active (figure 2) dans laquelle la tête 44 fait saillie vers le bas par rapport à la face 36 de butée pour s'emmancher dans le col 16 d'un corps 12 creux.

Plus particulièrement, en position active du mandrin 38, la tête 44 du mandrin est destinée à être emmanchée dans le col 16 d'un corps 12 creux, tandis qu'en position inactive du mandrin 38, le mandrin 38 est destiné à libérer le col 16 en extrayant la tête 44 du col 16 dudit corps 12 creux.

En variante non représentée de l'invention, le mandrin est destiné à saisir le col du corps creux par l'extérieur. Cette variante est bien connue de l'homme du métier et ne sera donc pas décrite plus en détails par la suite.

La tournette 27 comprend un ressort (non représenté) de rappel interposé entre la tête 44 du mandrin 38 et la douille 30 afin de rappeler la tête 44 du mandrin vers sa position active.

De manière connue, la tête 44 du mandrin 38 est pourvue de moyens élastiques (non représentés), tel qu'un joint torique, avantageusement réalisé dans un matériau élastique (tel qu'un élastomère), et dont le diamètre externe est égal ou légèrement supérieur au diamètre interne du col 16 d'un corps 12 creux, de façon à assurer la sustentation du corps 12 creux par frottement contre la paroi interne du col 16, lorsque la tête 44 est en position active.

En se reportant à nouveau à la figure 1, le dispositif 10 de convoyage comprend, par ailleurs, une première roue 52 et une deuxième roue (non représentée) montées chacune rotative sur le bâti 22 autour d'un axe vertical respectif. L'axe "Y" de rotation de la première roue 52 a été indiqué à la figure 1. La chaîne 26 de transport est engrenée autour des deux roues. La roue 52 engrène la chaîne 26 de transport entre un point M d'engrenage et un point L de libération. La chaîne 26 de transport engrène aussi une deuxième roue (non représentée).

L'une des deux roues, dite menante, est entraînée en rotation par un moteur pour mettre en mouvement la chaîne 26 de transport afin de déplacer les éléments 24 de transport le long d'un trajet de transport. La roue 52 est de préférence la roue menante (mais elle pourrait être une roue menée). La roue 52 tourne ici dans un sens antihoraire, comme cela est indiqué par la flèche "F1" de la figure 1.

La chaîne 26 de transport comprend un brin 26A retour, linéaire, où les éléments 24 de transport sont écartés de la roue 52, un brin 26B engrené, qui s'étend en arc de cercle du point M d'engrenage au point L de libération, et un brin 26C aller, linéaire, où les éléments 24 de transport sont à nouveau écartés de la roue 52.

Comme illustré sur la figure 1, les corps 12 creux sont chargées sur la chaîne 26 de transport à un point V de vêtissage, au moyen d'un premier dispositif de transfert qui se présente par exemple sous forme d'une roue 108 à encoches d'alimentation dont la rotation est synchronisée avec celle de la roue 52 et qui met les corps 12 creux au pas défini par celle-ci.

Les corps 12 creux ainsi chargés sur la chaîne 26 de transport circulent dans la station de conditionnement thermique en partant par le brin 26C aller.

Les corps 12 creux préchauffés reviennent ensuite vers la roue 52 par le brin 26A retour. Un deuxième dispositif de transfert est formé par une roue 110 à encoches de réception qui est agencée tangente avec la roue 52 à un point D de dévêtissage. La rotation du deuxième dispositif de transfert formé par la roue 110 à encoches de réception est synchronisée avec celle de la roue 52 pour prendre en charge individuellement chaque corps 12 creux préchauffé.

Au point V de vêtissage, qui s'étend en amont (dans le sens de rotation de la roue 52) du point L de libération, les mandrins 38 sont commandés depuis leur position inactive jusqu'à leur position active pour emmancher la tête 44 dans le col 16 d'un corps 12 creux associé afin de le libérer de la roue 108 à encoches d'alimentation. Le corps 12 creux est ainsi porté par le mandrin 38.

Les mandrins 38 des éléments 24 de transport circulant depuis le point V de vêtissage jusqu'au point D de dévêtissage occupent leur position active de manière à pouvoir transporter le corps 12 creux associé le long du trajet de transport.

Au point D de dévêtissage, qui s'étend en aval (dans le sens de rotation de la roue 52) du point M d'engrenage et en amont du point V de vêtissage, les mandrins 38 sont commandés depuis leur position active jusqu'à leur position inactive pour extraire la tête 44 de mandrin du col 16 du corps 12 creux associé. Le corps 12 creux désormais libre par rapport au mandrin 38 peut être pris en charge par la roue 110 à encoches de réception.

Les tournettes 27 de la chaîne 26 de transport circulent à vide depuis le point D de dévêtissage jusqu'au point V de vêtissage. Sur ce tronçon de trajet, les mandrins 38 sont maintenus dans leur position inactive en vue de la prise en charge d'un nouveau corps 12 creux. Par la suite, ce tronçon de trajet sera désigné par les termes "zone ZD de dévêtissage".

La position du mandrin 38 est commandée par un dispositif de commande à cames. A cet effet, et comme cela est illustré aux figures 2 et 3, le dispositif de commande comporte des premiers suiveurs 54 de came qui sont chacun solidaires en coulissement vertical d'un mandrin 38 associé, au moins entre le point M d'engrenage et le point L de libération.

Dans le mode de réalisation représenté aux figures 2 et 3, la roue 52 embarque une pluralité de poussoirs 56 destinés chacun à venir en prise d'engrenage avec un mandrin 38 sur la portion de trajectoire située entre les points M et L. Chaque poussoir 56 comprend à une extrémité radialement externe par rapport à la roue 52, une fourchette 58 qui s'étend radialement pour venir en prise d'engrenage avec un embout 60 en forme de bobine porté par le mandrin 38.

Comme représenté à la figure 2, chaque poussoir 56 est monté coulissant en translation parallèlement à l'axe X vertical par rapport à la roue 52 au moyen d'une colonne 62 d'axe vertical qui est reçue coulissante dans un orifice 64 complémentaire de la roue 52.

La colonne 62 est fixée par une section supérieure au poussoir 56, ici au moyen d'un écrou. A une extrémité inférieure, la colonne 62 est conformé en chape. Un premier suiveur 54 de came, formé par un galet, est monté en rotation par rapport à la colonne 62 autour d'un axe 66 transversal monté dans cette chape.

Un ressort 68 de rappel fonctionnant en compression est interposé entre la roue 52 et une collerette 70 formée radialement en saillie sur la colonne 62.

Le poussoir 56 est ainsi monté coulissant en translation verticale, par rapport à la roue 52, entre une position inactive dans laquelle, lorsque le poussoir 56 est en prise avec un mandrin 38 (c'est-à-dire que la fourchette 58 est en prise d'engrenage avec l'embout 60), il place celui-ci en position inactive (figure 3), et une position active dans laquelle, lorsque le poussoir 56 est en prise avec un mandrin 38, il place celui-ci en position active (figure 2).

Lorsque le poussoir 56 est en prise avec un mandrin 38, le premier suiveur 54 de came formé par le galet est alors solidaire en coulissement du mandrin 38 entre une position active correspondant à la position active du mandrin 38 et une position inactive correspondant à la position inactive du mandrin 38. Le poussoir est rappelé élastiquement vers sa position active par le ressort 68.

Comme illustré sur les figures 2 et 3, le bâti 22 est pourvu de plusieurs cames 72A, 72B fixes alignées sur le trajet du premier suiveur 54 de came. Chaque came 72A, 72B comporte un chemin 72A, 72B sur lequel le premier suiveur 54 de came est maintenu en appui par l'effort de rappel élastique du ressort 68.

Une première came 72A amont, par rapport au point D de dévêtissage, porte un chemin 74A amont (figure 2) et une deuxième came 72B aval, par rapport au point D de dévêtissage porte un chemin 74B aval (figure 3). Lorsque le poussoir 56 est à l'aplomb de la came 72A amont, le ressort 68 maintient le poussoir 56 dans sa position active (figure 2). Le chemin 74A amont de came coopère ainsi directement avec le premier suiveur 54 de came dans sa position active, c'est-à-dire que le galet formant le premier suiveur 54 de came roule sur le chemin 74A de came amont.

Lorsque le poussoir 56 est à l'aplomb de la came 72B aval, le suiveur 54 de came le maintient, via la colonne 62, dans sa position inactive (figure 3), à encontre de l'effort de rappel du ressort 68. Le chemin 74B aval de came coopère ainsi directement avec le premier suiveur 54 de came dans sa position inactive, c'est-à-dire que le galet formant le premier suiveur 54 de came roule sur le chemin 74B de came aval.

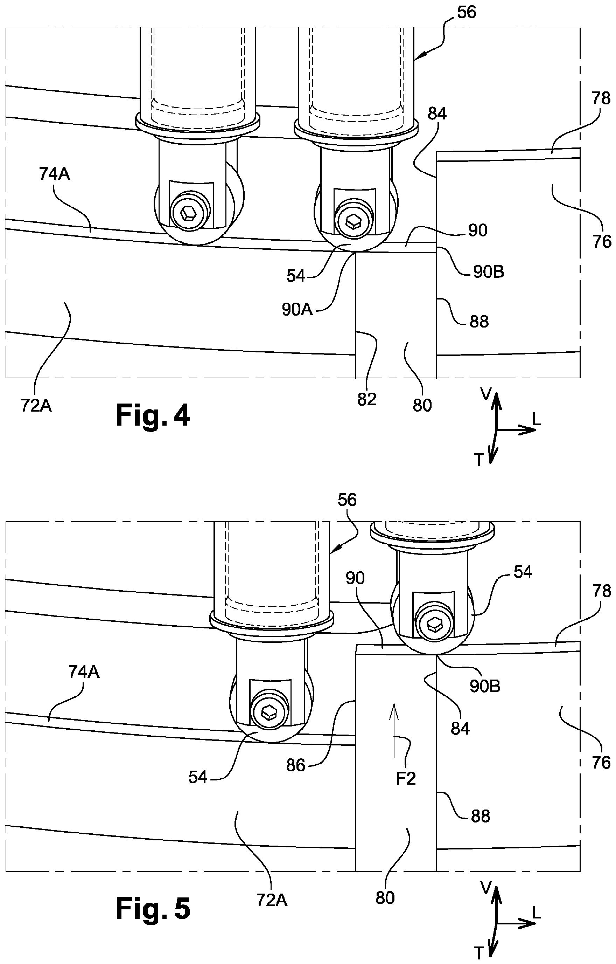

Le dispositif est équipé de moyens pour faire monter le premier suiveur 54 de came depuis le chemin 74A de came amont jusqu'au niveau du chemin 74B de came aval. Ces moyens sont agencés au point D de dévêtissage, comme cela est plus particulièrement illustré aux figures 4 et 5.

A cet effet, lesdits moyens sont formés par une came 80 élévatrice qui est agencée directement en aval du chemin 74A amont. Une came 76 de réception est agencée directement en aval de la came 80 élévatrice. La came 76 de réception comporte un chemin 78 de came qui est agencé au même niveau que le chemin 74B aval de came. Le chemin 78 de came de la came 76 de réception coopère directement avec le premier suiveur 54 de came pour maintenir le mandrin 38 dans sa position inactive.

Plus particulièrement, la came 80 élévatrice est agencée entre une face 82 verticale d'extrémité aval de la came 72A amont et une face 84 verticale d'extrémité amont de la came 76 de réception. La came 80 élévatrice est délimitée longitudinalement par une face 86 verticale d'extrémité amont et par une face 88 verticale d'extrémité aval.

La came 80 élévatrice comporte un chemin 90 de came sur lequel le premier suiveur 54 de came est destiné à rouler et qui s'étend depuis une extrémité 90A amont jusqu'à une extrémité 90B aval.

La came 80 élévatrice est montée coulissante verticalement entre une position basse dans laquelle l'extrémité 90A amont de son chemin 90 de came est dans le prolongement direct du chemin 74A de came amont, comme illustré à la figure 4, et une position haute dans laquelle l'extrémité 90B aval de son chemin 90 de came est dans le prolongement direct du chemin 78 de came de la came 76 de réception, comme illustré à la figure 5. La came 80 élévatrice permet ainsi, en coulissant depuis sa position basse jusqu'à sa position haute, de commander le mandrin 38 depuis sa position active vers sa position inactive en poussant le premier suiveur 54 de came.

L'expression "prolongement direct" signifie que le jeu longitudinal qui existe entre l'extrémité 90A amont, respectivement d'extrémité 90B aval, du chemin 90 de came de la came élévatrice et le chemin 74A amont de came, respectivement le chemin 78 de came de la came 76 de réception, est suffisamment faible pour permettre au suiveur 54 de came de passer ce jeu sans subir de déplacement vertical.

Ainsi, en position haute de la came 80 élévatrice, l'extrémité amont de son chemin 90 de came est située au-dessus du niveau du chemin 74A amont de came, tandis qu'en position basse, l'extrémité aval de son chemin 90 de came est située au-dessous du niveau du chemin 78 de came de la came 76 de réception.

Comme cela est représenté à la figure 4, la came 80 élévatrice commence sa course de déplacement vers sa position haute, indiquée par la flèche F2 de la figure 5, seulement après que le premier suiveur 54 de came a commencé à rouler sur son chemin 90 de came. La came 80 élévatrice devra en outre avoir atteint sa position haute avant que le premier suiveur 54 de came n'entre en contact avec la face 84 d'extrémité amont de la came 76 de réception, comme représenté à la figure 5.

Pendant la montée de la came 80 élévatrice vers sa position haute, le premier suiveur 54 de came coopère directement avec le chemin 90 de came de la came 80 élévatrice, c'est-à-dire qu'il roule contre ledit chemin 90 de came.

La came 80 élévatrice est ensuite commandée vers sa position basse avant que le premier suiveur 54 de came du poussoir 56 suivant n'entre en collision avec la face 86 verticale d'extrémité amont de la came 80 élévatrice.

Les déplacements de la came 80 élévatrice sont commandés par un moteur électrique (non représenté). Le moteur électrique est par exemple un moteur linéaire ou un moteur sans balais, généralement désigné par sa dénomination anglaise de moteur "brushless".

On comprend qu'il est nécessaire de commander les déplacements de la came 80 élévatrice de manière parfaitement synchronisée avec la rotation de la roue 52. Le dispositif 10 de convoyage comprend à cet effet un dispositif (non représenté) de synchronisation qui est apte à déterminer de la position angulaire instantanée de la roue 52. Un tel dispositif de synchronisation est déjà bien connu et ne sera pas décrit plus en détails par la suite.

Cependant, en cas de désynchronisation, le poussoir 56 risque d'être endommager car le premier suiveur 54 de came buterait soit contre la face 86 d'extrémité amont de la came 80 élévatrice, soit contre la face 84 d'extrémité amont de la came 76 de réception.

Une telle désynchronisation peut par exemple être causée par une coupure d'électricité ou par un dysfonctionnement du dispositif de synchronisation, tel qu'un codeur.

Pour éviter les dégâts susceptibles d'être causés par une désynchronisation, l'invention propose d'équiper le dispositif 10 de convoyage avec un système de sécurité.

Selon les enseignements de l'invention, au moins un deuxième suiveur 92 de came de sécurité solidaire en coulissement de chaque mandrin 38, au moins sur le tronçon de trajet compris entre le point M d'engrenage et le point L de libération. Comme cela est représenté à la figure 2, le premier suiveur 54 de came et le deuxième suiveur 92 de came sont décalés transversalement l'un par rapport à l'autre. Dans le cadre de l'exemple représenté aux figures, le deuxième suiveur 92 de came est porté par le poussoir 56.

En variante non représentée de l'invention, le deuxième suiveur 92 de came est porté par le mandrin 38.

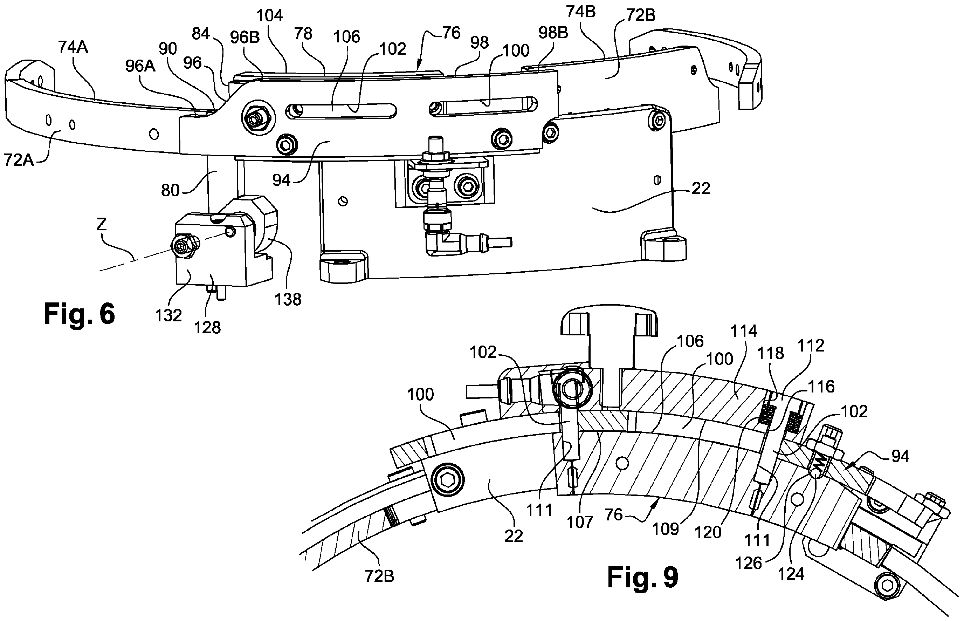

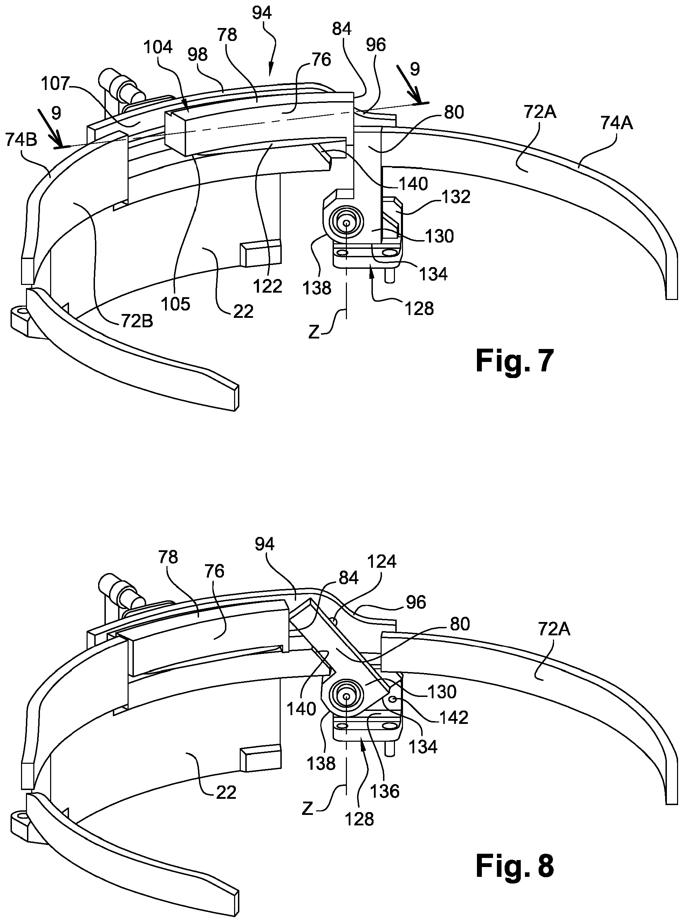

En outre, une came 94 de sécurité est agencée parallèlement à la came 76 de réception, comme cela est particulièrement visible aux figures 6 et 7. La came 94 de sécurité comporte une rampe 96 de commande pour commander le mandrin 38 depuis sa position active vers sa position inactive par coopération directe avec le deuxième suiveur 92 de came.

Une extrémité 96A amont de la rampe 96 de commande est agencée à niveau avec le deuxième suiveur 92 de came lorsque le mandrin 38 occupe sa position active. Une extrémité 96B aval de la rampe 96 de commande est agencée sensiblement à niveau avec le deuxième suiveur 92 de came lorsque le mandrin 38 occupe sa position inactive.

En outre, la came 94 de sécurité comporte un chemin 98 de came qui prolonge, en aval, la rampe 96 de commande. Le chemin 98 de la came 94 de sécurité est agencé sensiblement au même niveau que le deuxième suiveur 92 de came lorsque le mandrin 38 occupe sa position inactive.

La came 94 de sécurité est décalée transversalement par rapport à la came 76 de réception d'une distance qui est égale à la distance de décalage entre le premier suiveur 54 de came et le deuxième suiveur 92 de came. La came 94 de sécurité est ainsi destinée à coopérer directement avec le deuxième suiveur 92 de came pour commander le mandrin 38 vers sa position inactive en cas de défaillance de la came 80 élévatrice.

Dans le mode de réalisation représenté aux figures, le deuxième suiveur 92 de came est agencé à la même hauteur que le premier suiveur 54 de came sur le poussoir 56. Plus particulièrement, le deuxième suiveur 92 de came est formé par un galet qui est monté sur la colonne 62 à rotation coaxialement au galet formant le premier suiveur 54 de came.

De ce fait, l'extrémité 96A amont de la rampe 96 de commande est agencée à niveau avec le chemin 74A de came amont, l'extrémité 96B aval de la rampe 96 de commande est agencée sensiblement à niveau avec le chemin 78 de la came 76 de réception, et le chemin 98 de la came 94 de sécurité est agencé sensiblement au même niveau que le chemin74B de la came 72B aval.

La came 94 de sécurité est montée fixe par rapport au bâti 22, et donc fixe par rapport à la came 72A amont.

Dans l'exemple visible aux figures 6 et 7, en fonctionnement normal, la face 84 d'extrémité amont de la came 76 de réception fait saillie verticalement par rapport à une portion aval de la rampe 96 de commande de la came 94 de sécurité.

De ce fait, lorsque la came 80 élévatrice est bloquée dans sa position basse, le premier suiveur 54 de came est susceptible de venir heurter la face 84 d'extrémité amont pendant que le deuxième suiveur 92 de came roule sur la rampe 96 de commande.

Pour éviter que ce choc n'endommage le premier suiveur 54 de came et/ou la colonne 62, la came 76 de réception est conçue pour être escamotable depuis :
- une position de fonctionnement normal, illustrée à la figure 7, dans laquelle une extrémité aval de son chemin de came est dans le prolongement direct du chemin de came de la came 80 élévatrice en position haute ; vers
- une position de sécurité dans laquelle sa face 84 d'extrémité amont est en dehors du trajet du premier suiveur 54 de came, comme cela est représenté à la figure 8.

Avantageusement, la came 76 de réception est susceptible d'être poussée vers sa position de sécurité uniquement sous l'effet d'un choc avec le premier suiveur 54 de came. En d'autres termes, l'énergie nécessaire au déplacement de la came 76 de réception vers sa position de sécurité est entièrement fournie par le choc avec le premier suiveur 54 de came.

Dans l'exemple représenté aux figures, la came 76 de réception est montée coulissante longitudinalement sur la came 94 de sécurité entre sa position de fonctionnement normal, et sa position de sécurité.

Pour permettre son coulissement, la came 76 de réception est plus courte que la came 94 de sécurité d'une distance qui est au moins égale à la course de coulissement de la came 76 de réception entre sa position de fonctionnement normal et sa position de sécurité, comme cela est représenté aux figures 7 à 9. Ainsi, en position de sécurité, la came 76 de réception est stockée parallèlement à la came 94 de sécurité.

Comme cela est visible à la figure 6, un tronçon 98B d'extrémité aval du chemin 98 de la came 94 de sécurité est agencé parallèlement à un tronçon d'extrémité amont du chemin 74B de came aval de manière que le premier suiveur 54 de came soit en contact avec le chemin 74B de came aval lorsque le deuxième suiveur 92 de came roule sur ledit tronçon 98B. Ceci permet de transférer la commande du mandrin 38 entre la came 94 de sécurité et le chemin 74B de came aval sans changement d'état du mandrin 38.

La trajectoire de transport étant en arc de cercle, on comprendra que la came 76 de réception et la came 94 de sécurité présentent toutes les deux une forme d'arc de cercle concentriques. Le coulissement de la came 76 de réception par rapport à la came 94 de sécurité est réalisé selon une trajectoire en arc de cercle.

En variante non représentée de l'invention, la came 76 de réception est montée pivotante par rapport à la came 94 de sécurité.

Selon une autre variante non représentée de l'invention, la came 76 de réception est fixée à la came 94 de sécurité par l'intermédiaire d'éléments de fixation faisant office de fusibles mécaniques. Ainsi, lorsque la came 76 de réception est heurtée par un premier suiveur 54 de came, les éléments de fixation sont rompus sous l'effet du choc, ce qui fait tomber la came 76 de réception en dehors du trajet des premiers suiveurs 54 de came.

La came 76 de réception comporte une face 104 supérieure sur laquelle est formé le chemin 78 de came. Elle comporte aussi une face 106 latérale verticale qui s'étend longitudinalement et qui est tournée vers la came 94 de sécurité, comme cela est visible à la figure 9. Elle comporte aussi une face inférieure 105 opposée à la face 104 supérieure.

La face 106 latérale came 76 de réception est ici agencée en appui transversal contre un flanc 107 en vis-à-vis de la came 94 de sécurité. En outre la face inférieure 105 de la came 76 de réception est en appui vertical sur le bâti 22, comme cela est illustré à la figure 7.

Pour permettre le guidage en coulissement de la came 76 de réception, la came 94 de sécurité est traversée transversalement de deux fentes 100 de guidage qui s'étendent longitudinalement, comme représenté aux figures 6 et 9. Les fentes 100 de guidage sont destinées à recevoir les tiges de deux vis 102 transversales de guidage de la came 76 de réception sur la came 94 de sécurité. Une extrémité filetée de chaque vis 102 est vissée dans un taraudage 111 correspondant réalisé dans la face 106 latérale de la came 94 de sécurité. Une tête 112 de chaque vis 102 prend appui sur le flanc 109 opposé de la came 94 de sécurité pour serrer légèrement la face 106 latérale de la came 76 de réception contre le flanc 107 de la came 94 de sécurité. Ce serrage est suffisant pour maintenir la came 76 de réception par rapport à la came 94 de sécurité tout en permettant son coulissement avec frottement de la face 106 latérale de la came 76 de réception contre la came 94 de sécurité.

Pour permettre de répartir les efforts de serrage des têtes 112 sur toute la surface du flanc 109 de la came 94 de sécurité, une contrepartie 114 est interposée entre les têtes 112 de vis et le flanc 109 de la came 94 de sécurité. Cette contrepartie 114 présente globalement la même longueur et la même hauteur que la came 76 de réception. Elle est traversée de deux orifices 116 lisses qui sont destinés à laisser passer les tiges des vis 102 vers les fentes 100. Ainsi, la contrepartie 114 est montée coulissante de manière solidaire avec la came 76 de réception.

Les têtes 112 de vis sont ici logées dans des lamages 118 respectifs réalisés autour de chaque orifice 116.

Afin de maîtriser l'effort de serrage plus aisément, il est prévu d'intercaler un organe 120 élastique en compression entre la tête 112 d'au moins une vis 102 et la contrepartie 114. L'organe 120 élastique est ici formé d'un empilement de rondelles élastiques, par exemple de type Belleville. Ainsi, lors du montage de la came 76 de réception, la vis 102 est vissée de manière à comprimer l'organe 120 élastique. La tête 112 de vis est arrêtée à une distance transversale de la contrepartie 114 suffisante pour permettre de décoller la contrepartie du flanc 109 de la came 94 de sécurité en comprimant davantage l'organe 120 élastique.

La tête 112 de vis prend ainsi appui sur le flanc 109 de la came 94 de sécurité par l'intermédiaire de l'organe 120 élastique. La came 94 de sécurité est alors serrée transversalement entre la came 76 de réception et la contrepartie 114 sous l'effet de l'effort élastique fourni par l'organe 120 élastique. Cet effort élastique est calibré de manière à ce qu'un choc entre un premier suiveur 54 de came et la came 76 de réception fournisse un effort suffisant pour surmonter la résistance due au frottement et ainsi faire coulisser la came 76 de réception vers sa position de sécurité, comme représenté à la figure 8.

Pour faciliter le coulissement de la came 76 de réception, un patin 122 de glissement est interposé entre la came 94 de réception et le bâti.

En outre, pour éviter que, en fonctionnement normal, plusieurs premiers suiveurs 54 de came qui n'exercent un effort vertical important sur la came 76 de réception sur toute sa longueur, ce qui pourrait gripper le coulissement, il est prévu que le chemin de la came 94 de sécurité soit légèrement plus haut que celui de la came 76 de réception. La différence de hauteur entre les deux chemins de came est très faible, par exemple inférieure à 1 mm. De cette manière, une portion d'extrémité supérieure de la rampe 96 de commande fait légèrement saillie verticalement par rapport au chemin de came 76 de réception. Ainsi, au passage du mandrin 38 au droit de cette portion d'extrémité supérieure de la rampe 96 de commande, les efforts de rappel élastique du mandrin 38 sont entièrement supportés par la came 94 de sécurité via le second suiveur 92 de came.

Pour garantir que la came 76 de réception occupe bien sa position de fonctionnement normal, le dispositif comporte des moyens d'indexation de la came 76 de réception dans sa position de fonctionnement normal.

Ces moyens d'indexation sont ici formés par emboîtement transversal élastique entre un élément mâle et un élément femelle dont l'un est porté par un flanc 107 de la came 94 de sécurité et l'autre est porté par la face 106 latérale en vis-à-vis de la came 76 de réception.

Plus particulièrement, les moyens d'indexation comportent ici une bille 124 d'indexation qui est montée coulissante élastiquement dans l'épaisseur de la came 94 de sécurité entre une position d'indexation dans laquelle elle fait saillie par rapport au flanc de la came 94 de sécurité et vers laquelle elle est rappelée élastiquement, comme représenté à la figure 9, et une position rétractée dans l'épaisseur de la came 94 de sécurité en deçà du flanc, non représentée. La bille 124 d'indexation coopère avec un cran 126 d'indexation qui est réalisé dans la face 106 latérale de la came 76 de réception. Le cran 126 d'indexation est en regard de la bille 124 d'indexation lorsque la came 76 de réception est dans sa position de fonctionnement normal.

Ainsi, lorsque la came 80 élévatrice est bloquée dans sa position basse tandis que les éléments 24 de transport continuent leur trajet, le second suiveur 92 de came monte le long de la rampe 96 de commande, soulevant ainsi le premier suiveur 54 de came par rapport à la came élévatrice. Lorsque le premier suiveur 54 de came heurte la face d'extrémité amont de la came 76 de réception, l'effort produit par le choc provoque le coulissement de la came 76 de réception vers sa position de sécurité. L'effort produit par le choc est notamment suffisamment élevé pour surmonter la résistance due au frottement ainsi que pour pousser la bille 124 d'indexation vers sa position rétractée.

Ainsi, le passage est libéré pour les premiers suiveurs 54 de came des éléments 24 de transport suivants et les mandrins 38 peuvent être commandés en position inactive par la rampe 96 de commande sans interférence.

Bien entendu, il peut aussi arriver que la came 80 élévatrice soit bloquée sans occuper sa position basse. La came 80 élévatrice est ainsi bloquée dans une position intermédiaire ou dans sa position haute, tandis que les éléments 24 de transports continuent à se déplacer le long de leur trajet. Dans ce cas, la face 86 d'extrémité amont de la came 80 élévatrice fait saillie au-dessus du chemin de came 74A amont. Les premiers suiveurs 54 de came sont donc susceptibles de heurter la face 86 d'extrémité amont de la came 80 élévatrice en cas de désynchronisation.

Pour résoudre ce problème, la came 80 élévatrice est portée par un support 128 coulissant verticalement qui se déplace de manière solidaire entre sa position basse et sa position haute. La came 80 élévatrice est plus particulièrement montée mobile sur le support 128 coulissant verticalement entre une position fonctionnelle, illustrée à la figure 7, dans laquelle la came 80 élévatrice est susceptible d'être déplacée par le support 128 entre sa position basse et sa position haute, et une position escamotée, illustrée à la figure 8, dans laquelle sa face 86 d'extrémité amont est en dehors du trajet du premier suiveur 54 de came quelle que soit la position du support 128.

Plus particulièrement, dans le mode de réalisation représenté aux figures, la came 80 élévatrice est montée pivotante sur son support 128 autour d'un axe "Z" transversal entre sa position fonctionnelle, dans laquelle la came 80 élévatrice s'étend verticalement, et sa position escamotée dans laquelle la came 80 élévatrice est inclinée en direction de la came 76 de réception de manière à être agencée sous le niveau de la rampe 96 de commande, comme illustré à la figure 8.

La came 80 élévatrice est par la suite décrite en référence à sa position fonctionnelle représentée aux figures 6 et 7. La came 80 élévatrice comporte une embase 130 inférieure. L'axe "Z" de rotation transversal de la came 80 élévatrice traverse l'embase 130. La came 80 élévatrice est ainsi montée pivotante sur une aile 132 verticale longitudinale du support 128 par l'intermédiaire de son embase 130.

L'embase 130 présente une face 134 inférieure plane qui est décalée longitudinalement vers l'amont par rapport à l'axe "Z" de rotation. La face 134 inférieure est destinée à venir en contact avec une face 136 supérieure du support 128 pour interdire le pivotement de la came 80 élévatrice au-delà de sa position fonctionnelle lorsqu'elle est pivotée depuis sa position escamotée.

L'embase 130 présente en outre une forme qui permet le pivotement de la came 80 élévatrice entre sa position fonctionnelle et sa position escamotée sans interférence avec le support 128.

La face 134 inférieure de l'embase 130 est ici prolongée vers l'avant par une face 138 arrondie avant. La face 138 arrondie est centrée sur l'axe "Z" de rotation de la came 80 élévatrice et l'extrémité amont de la face 138 arrondie est agencée verticalement au droit de l'axe "Z" de rotation de manière qu'en position fonctionnelle, la face 134 inférieure soit en appui plan contre la face 136 supérieure du support 128.

En variante, l'embase 130 présente une face biseautée qui s'étend en surplomb au-dessus de la face 136 supérieure du support 128 depuis l'extrémité aval de la face 134 inférieure jusqu'à une face vertical aval de la came 80 élévatrice.

La rotation de la came 80 élévatrice vers sa position escamotée est ainsi autorisée par la forme de l'embase 130. La rotation provoque le soulèvement de la face 134 inférieure par rapport au support 128.

Le pivotement de la came 80 élévatrice est limité vers sa position escamotée par contact avec une face 140 d'arrêt du bâti 22.

Des moyens d'indexation permettent d'indexer la came 80 élévatrice dans sa position fonctionnelle par rapport au support 128. Les moyens d'indexation sont similaires à ceux qui ont été décrits en association avec la came 76 de réception.

Ainsi, dans le mode de réalisation représenté aux figures, l'aile 132 du support 128 comporte un poussoir dont la bille 142 d'indexation coopère avec un cran (non représenté) réalisé dans la came 80 élévatrice lorsque celle-ci occupe sa position fonctionnelle.

Lorsque la came 80 élévatrice est bloquée dans une position différente de sa position basse tandis que les éléments 24 de transport continuent leur trajet, le premier suiveur 54 de came heurte la face 86 d'extrémité amont de la came 80 élévatrice. L'effort produit par le choc provoque le pivotement de la came 80 élévatrice vers sa position escamotée. L'effort produit par le choc est notamment suffisamment élevé pour pousser la bille d'indexation vers sa position rétractée. Ainsi, la came 80 élévatrice est poussée vers sa position escamotée sous l'effet d'un choc avec le premier suiveur 54 de came.

Lors de son pivotement, la face 88 d'extrémité aval de la came 80 élévatrice forme une face de poussée qui entre en contact avec la face 84 en vis-à-vis de la came 76 de réception avant que la came 80 élévatrice ne soit dans sa position escamotée. L'énergie procurée par le choc entre le premier suiveur 54 de came et la came 80 élévatrice est suffisante pour que la came 80 élévatrice pousse, à son tour, la came 76 de réception vers sa position de sécurité lorsque la came 80 élévatrice est déplacée vers sa position escamotée, quelle que soit la position du support 128 coulissant, comme cela est représenté à la figure 8.

Pendant le pivotement de la came 80 élévatrice, l'élément 24 de transport poursuit son trajet et le mandrin 38 est commandé vers sa position haute par roulement du deuxième suiveur 92 de came sur la rampe 96 de commande.

La came 80 élévatrice et la came 76 de réception occupant ainsi leurs positions escamotées respectives, les premiers suiveurs 54 de came des éléments 24 de transport suivants ne subissent pas de choc lors de leur passage au droit de la rampe 96 de commande.

L'invention permet avantageusement d'éviter que des éléments du dispositif de convoyage ne soient endommagés en cas de désynchronisation de la came 80 élévatrice.

En outre, le système de sécurité est aisé à remettre en position fonctionnelle manuellement lorsque la came 80 élévatrice est à nouveau synchronisée avec les éléments 24 de transport.

## Revendications

1. Dispositif (10) de convoyage de corps (12) creux pour une installation de fabrication de récipients par formage de préformes, le dispositif (10) de convoyage comportant :
- au moins un élément (24) de transport mobile dans une direction longitudinale, et comportant au moins un mandrin (38) coulissant verticalement entre une position active dans laquelle une tête (44) est destinée à saisir un corps (12) creux par un col (16), notamment par emmanchement dans le col (16), et une position inactive dans laquelle la tête (44) est destinée à libérer le col (16) ;
- au moins un premier suiveur (54) de came solidaire en coulissement du mandrin (38) ;
- une came (76) de réception qui comporte un chemin (78) de came qui coopère directement avec le premier suiveur (54) de came pour maintenir le mandrin (38) dans sa position inactive ;
**caractérisé en ce qu'**il comporte :
- une came (80) élévatrice, agencée directement en amont de la came (76) de réception, la came (80) élévatrice étant montée coulissante verticalement entre une position basse et une position haute pour commander le mandrin (38) depuis sa position active vers sa position inactive en poussant le premier suiveur (54) de came ;
- au moins un deuxième suiveur (92) de came de sécurité solidaire en coulissement du mandrin (38) ;
- une came (94) de sécurité qui comporte une rampe (96) de commande pour commander le mandrin (38) depuis sa position active vers sa position inactive par coopération directe avec le deuxième suiveur (92) de came en cas de défaillance de la came (80) élévatrice.

2. Dispositif (10) selon la revendication précédente, **caractérisé en ce que** le premier suiveur (54) de came et le deuxième suiveur (92) de came sont décalés transversalement, la came (94) de sécurité étant agencée parallèlement à la came (76) de réception.

3. Dispositif (10) selon la revendication précédente, **caractérisé en ce que** la came (76) de réception présente une face (84) d'extrémité amont qui est susceptible d'être heurtée par le premier suiveur (54) de came lorsque le deuxième suiveur (92) de came roule sur la rampe (96) de commande, la came (76) de réception étant escamotable depuis une position de fonctionnement normal, dans laquelle son chemin (78) de came est dans le prolongement direct du chemin (90) de came de la came (80) élévatrice en position haute, vers une position de sécurité dans laquelle sa face (84) d'extrémité amont est en dehors du trajet du premier suiveur (54) de came.

4. Dispositif (10) selon la revendication précédente, **caractérisé en ce que** la came (76) de réception est susceptible d'être poussée vers sa position de sécurité sous l'effet d'un choc avec le premier suiveur (54) de came.

5. Dispositif (10) selon l'une quelconque des revendications 3 ou 4, **caractérisé en ce que** la came (76) de réception est montée coulissante longitudinalement sur la came (94) de sécurité entre sa position de fonctionnement normal et sa position de sécurité.

6. Dispositif (10) selon l'une quelconque des revendications 3 à 5, **caractérisé en ce qu'**il comporte des moyens d'indexation de la came (76) de réception dans sa position de fonctionnement normal.

7. Dispositif (10) selon l'une quelconque des revendications 3 à 6, **caractérisé en ce que** la came (80) élévatrice présente une face (86) d'extrémité amont qui est susceptible d'être heurtée par le premier suiveur (54) de came en cas de désynchronisation, la came (80) élévatrice étant montée mobile sur un support (128) coulissant verticalement entre une position fonctionnelle dans laquelle la came (80) élévatrice est susceptible d'être déplacée par le support (128) entre sa position basse et sa position haute, et une position escamotée dans laquelle sa face (86) d'extrémité amont est en dehors du trajet du premier suiveur (54) de came quelle que soit la position du support (128).

8. Dispositif (10) selon la revendication précédente, **caractérisé en ce que** la came (80) élévatrice est susceptible d'être poussée vers sa position escamotée sous l'effet d'un choc avec le premier suiveur (54) de came.

9. Dispositif (10) selon l'une quelconque des revendications 7 ou 8, **caractérisé en ce que** la came (80) élévatrice est montée pivotante au tour d'un axe (Z) transversal sur son support (128) entre sa position fonctionnelle et sa position escamotée.

10. Dispositif (10) selon l'une quelconque des revendications 7 à 9, **caractérisé en ce qu'**il comporte des moyens d'indexation de la came (80) élévatrice dans sa position fonctionnelle par rapport au support (128).

11. Dispositif (10) selon l'une quelconque des revendications 7 à 10 prises en combinaison avec l'une quelconque des revendications 3 à 6, **caractérisé en ce que** la came (80) élévatrice comporte une face (88) tournée vers une face (84) en vis-à-vis de la came (76) de réception, la came (76) de réception étant susceptible d'être poussée par la came (80) élévatrice vers sa position de sécurité lorsque la came (80) élévatrice est déplacée vers sa position escamotée.

## Patentansprüche

1. Vorrichtung (10) zur Förderung von Hohlkörpern (12) für eine Anlage zur Herstellung von Behältern durch Formung von Vorformen, wobei die Fördervorrichtung (10) aufweist:
- wenigstens ein Transportelement (24), das in einer Längsrichtung beweglich ist und wenigstens einen Dorn (38) aufweist, der vertikal zwischen einer aktiven Position, in welcher ein Kopf (44) dazu bestimmt ist, einen Hohlkörper (12) an einem Hals (16) zu greifen, insbesondere durch Einstecken in den Hals (16), und einer inaktiven Position, in welcher der Kopf (44) dazu bestimmt ist, den Hals (16) freizugeben, gleitet;
- wenigstens einen ersten Nockenfolger (54), der mit dem Dorn (38) verschiebefest verbunden ist;
- einen Aufnahmenocken (76), welcher eine Nockenbahn (78) aufweist, welche direkt mit dem ersten Nockenfolger (54) zusammenwirkt, um den Dorn (38) in seiner inaktiven Position zu halten;
**dadurch gekennzeichnet, dass** sie aufweist:
- einen Hubnocken (80), der direkt stromaufwärts des Aufnahmenockens (76) angeordnet ist, wobei der Hubnocken (80) zwischen einer niedrigen und einer hohen Position vertikal gleitend angebracht ist, um den Dorn (38) durch Schieben des ersten Nockenfolgers (54) aus seiner aktiven Position in Richtung seiner inaktiven Position zu steuern;
- wenigstens einen zweiten Sicherungsnockenfolger (92), der mit dem Dorn (38) verschiebefest verbunden ist;
- einen Sicherungsnocken (94), welcher eine Steuerungsrampe (96) zum Steuern des Dorns (38) aus seiner aktiven Position in Richtung seiner inaktiven Position durch direktes Zusammenwirken mit dem zweiten Nockenfolger (92) im Falle eines Ausfalls des Hubnockens (80) aufweist.

2. Vorrichtung (10) nach dem vorhergehenden Anspruch, **dadurch gekennzeichnet, dass** der erste Nockenfolger (54) und der zweite Nockenfolger (92) in Querrichtung versetzt sind, wobei der Sicherungsnocken (94) parallel zum Aufnahmenocken (76) angeordnet ist.

3. Vorrichtung (10) nach dem vorhergehenden Anspruch, **dadurch gekennzeichnet, dass** der Aufnahmenocken (76) eine stromaufwärtige Endfläche (84) aufweist, welche dazu eingerichtet ist, von dem ersten Nockenfolger (54) angestoßen zu werden, wenn der zweite Nockenfolger (92) auf der Steuerungsrampe (96) rollt, wobei der Aufnahmenocken (76) aus einer normalen Betriebsposition, in welcher sich seine Nockenbahn (78) in der direkten Verlängerung der Nockenbahn (90) des Hubnockens (80) in der hohen Position befindet, in Richtung einer Sicherheitsposition einklappbar ist, in welcher sich seine stromaufwärtige Endfläche (84) außerhalb des Weges des ersten Nockenfolgers (54) befindet.

4. Vorrichtung (10) nach dem vorhergehenden Anspruch, **dadurch gekennzeichnet, dass** der Aufnahmenocken (76) dazu eingerichtet ist, unter der Wirkung eines Zusammenstoßes mit dem ersten Nockenfolger (54) in Richtung seiner Sicherheitsposition geschoben zu werden.

5. Vorrichtung (10) nach einem der Ansprüche 3 oder 4, **dadurch gekennzeichnet, dass** der Aufnahmenocken (76) auf dem Sicherungsnocken (94) zwischen seiner normalen Betriebsposition und seiner Sicherheitsposition in Längsrichtung gleitend angebracht ist.

6. Vorrichtung (10) nach einem der Ansprüche 3 bis 5, **dadurch gekennzeichnet, dass** sie Mittel zur Indexierung des Aufnahmenockens (76) in seiner normalen Betriebsposition aufweist.

7. Vorrichtung (10) nach einem der Ansprüche 3 bis 6, **dadurch gekennzeichnet, dass** der Hubnocken (80) eine stromaufwärtige Endfläche (86) aufweist, welche dazu eingerichtet ist, von dem ersten Nockenfolger (54) im Falle einer Desynchronisation angestoßen zu werden, wobei der Hubnocken (80) auf einem vertikal gleitenden Träger (128) beweglich zwischen einer Betriebsposition, in welcher der Hubnocken (80) dazu eingerichtet ist, von dem Träger (128) zwischen seiner niedrigen Position und seiner hohen Position verschoben zu werden, und einer eingeklappten Position, in welcher sich seine stromaufwärtige Endfläche (86) unabhängig von der Position des Trägers (128) außerhalb des Weges des ersten Nockenfolgers (54) befindet, angebracht ist.

8. Vorrichtung (10) nach dem vorhergehenden Anspruch, **dadurch gekennzeichnet, dass** der Hubnocken (80) dazu eingerichtet ist, unter der Wirkung eines Zusammenstoßes mit dem ersten Nockenfolger (54) in Richtung seiner eingeklappten Position geschoben zu werden.

9. Vorrichtung (10) nach einem der Ansprüche 7 oder 8, **dadurch gekennzeichnet, dass** der Hubnocken (80) auf seinem Träger (128) um eine Querachse (Z) schwenkbar zwischen seiner Betriebsposition und seiner eingeklappten Position gelagert ist.

10. Vorrichtung (10) nach einem der Ansprüche 7 bis 9, **dadurch gekennzeichnet, dass** sie Mittel zur Indexierung des Hubnockens (80) in seiner Betriebsposition in Bezug auf den Träger (128) aufweist.

11. Vorrichtung (10) nach einem der Ansprüche 7 bis 10 in Kombination mit einem der Ansprüche 3 bis 6, **dadurch gekennzeichnet, dass** der Hubnocken (80) eine Fläche (88) aufweist, die einer gegenüberliegenden Fläche (84) des Aufnahmenockens (76) zugewandt ist, wobei der Aufnahmenocken (76) dazu eingerichtet ist, von dem Hubnocken (80) in Richtung seiner Sicherheitsposition geschoben zu werden, wenn der Hubnocken (80) in Richtung seiner eingeklappten Position4 bewegt wird.

## Claims

1. Device (10) for conveying hollow bodies (12) for an installation for producing containers by forming of preforms, the conveying device (10) comprising:
- at least one transport element (24) that is able to move in a longitudinal direction, and comprising at least one mandrel (38) that slides vertically between an active position in which a head (44) is intended to grasp a hollow body (12) by a neck (16), in particular by press-fitting in the neck (16), and an inactive position in which the head (44) is intended to release the neck (16);
- at least one first cam follower (54) that slides conjointly with the mandrel (38);
- a receiving cam (76) which comprises a cam track (78) that cooperates directly with the first cam follower (54) to hold the mandrel (38) in its inactive position;
**characterized in that** it comprises:
- a lifting cam (80) arranged directly upstream of the receiving cam (76), the lifting cam (80) being mounted so as to slide vertically between a lower position and an upper position in order to drive the mandrel (38) from its active position to its inactive position by pushing the first cam follower (54);
- at least one second, safety cam follower (92) that slides conjointly with the mandrel (38);
- a safety cam (94) which comprises a driving ramp (96) for driving the mandrel (38) from its active position to its inactive position by direct cooperation with the second cam follower (92) in the event of the lifting cam (80) failing.

2. Device (10) according to the preceding claim, **characterized in that** the first cam follower (54) and the second cam follower (92) are transversely offset, the safety cam (94) being arranged parallel to the receiving cam (76).

3. Device (10) according to the preceding claim, **characterized in that** the receiving cam (76) has an upstream end face (84) against which the first cam follower (54) can impact when the second cam follower (92) roles on the driving ramp (96), the receiving cam (76) being retractable from a normal operating position, in which its track (78) is in direct extension of the cam track (90) of the lifting cam (80) in the upper position, to a safety position in which its upstream end face (84) is not in the path of the first cam follower (54).

4. Device (10) according to the preceding claim, **characterized in that** the receiving cam (76) is able to be pushed towards its safety position by an impact with the first cam follower (54).

5. Device (10) according to either one of Claims 3 and 4, **characterized in that** the receiving cam (76) is mounted so as to slide longitudinally on the safety cam (94) between its normal operating position and its safety position.

6. Device (10) according to any one of Claims 3 to 5, **characterized in that** it comprises means for indexing the receiving cam (76) in its normal operating position.

7. Device (10) according to any one of Claims 3 to 6, **characterized in that** the lifting cam (80) has an upstream end face (86) against which the first cam follower (54) can impact in the event of desynchronisation, the lifting cam (80) being mounted so as to move on a support (128) that slides vertically between a functional position in which the lifting cam (80) can be moved by the support (128) between its lower position and its upper position, and a retracted position in which its upstream end face (86) is not in the path of the first cam follower (54) whatever the position of the support (128).

8. Device (10) according to the preceding claim, **characterized in that** the lifting cam (80) can be pushed towards its retracted position by an impact with the first cam follower (54).

9. Device (10) according to either one of Claims 7 and 8, **characterized in that** the lifting cam (80) is mounted so as to pivot about a transverse axis (Z) on its support (128) between its functional position and its retracted position.

10. Device (10) according to any one of Claims 7 to 9, **characterized in that** it comprises means for indexing the lifting cam (80) in its functional position relative to the support (128).

11. Device (10) according to any one of Claims 7 to 10, considered in combination with any one of Claims 3 to 6, **characterized in that** the lifting cam (80) comprises a face (88) oriented towards a face (84) opposite the receiving cam (76), wherein the receiving cam (76) can be pushed towards its safety position by the lifting cam (80) when the lifting cam (80) is moved towards its retracted position.
